(19) **Europäisches Patentamt**
**European Patent Office**
**Office européen des brevets**

(11) **EP 1 839 851 B1**

(12) **EUROPEAN PATENT SPECIFICATION**

(45) Date of publication and mention
of the grant of the patent:
**01.09.2010 Bulletin 2010/35**

(51) Int Cl.:
***B32B 27/32*** *(2006.01)*    *B32B 27/28* *(2006.01)*
*B32B 27/18* *(2006.01)*    *C08L 23/08* *(2006.01)*

(21) Application number: **07105033.0**

(22) Date of filing: **27.03.2007**

(54) **Agricultural Film**

Landwirtschaftliche Folie

Film agricole

(84) Designated Contracting States:
**ES FR GR IT**

(30) Priority: **30.03.2006 JP 2006093738**
**28.09.2006 JP 2006264174**

(43) Date of publication of application:
**03.10.2007 Bulletin 2007/40**

(73) Proprietor: **Sumitomo Chemical Company,**
**Limited**
**Tokyo 104-8260 (JP)**

(72) Inventors:
• **Kojima, Tomoki**
**Ichihara-shi Chiba (JP)**

• **Nambu, Jinsho**
**Kamakura-shi**
**Kanagawa (JP)**

(74) Representative: **Vossius & Partner**
**Siebertstrasse 4**
**81675 München (DE)**

(56) References cited:
**US-A1- 2004 021 248**    **US-A1- 2004 030 082**
**US-A1- 2006 210 804**

• **DATABASE WPI Week 200231 Derwent**
**Publications Ltd., London, GB; AN 2002-262636**
**XP002456242 & JP 2001 334612 A (SUMITOMO**
**CHEM CO LTD) 4 December 2001 (2001-12-04)**

**Description**

The present invention relates to agricultural films which can be used suitably for covering agricultural houses, tunnels and the like.

Plastic films to be used for covering agricultural houses, tunnels and the like are called "agricultural films." As such agricultural films, poly(vinyl chloride) films, polyolefin resin films such as polyethylene films and ethylene/vinyl acetate copolymer films are widely used. Properties which agricultural films are required to have in order to exert good crop growing performance include transparency, anti-dropping property, etc.

JP-A 2001-334612 discloses a multilayer film comprising a first layer of an ethylene/α-olefin copolymer, a third layer of an ethylene/vinyl acetate copolymer and a second layer composed of an ethylene/vinyl acetate copolymer and an ethylene/α-olefin copolymer, the second layer being disposed between the first layer and the third layer, wherein at least the third layer contains a surfactant. It is disclosed that this multilayer film can be used suitably as a covering film of agricultural facilities.

The transparency of the multilayer film, however, may deteriorate with time due to occurrence of crystallization of the surfactant on a film surface or the anti-dropping property may be lost in a short period of time.

An object of the present invention is to provide agricultural films excellent in durability of transparency and durability of anti-dropping property.

In one aspect, the present invention is directed to an agricultural film comprising a first layer and a second layer, the first layer being a layer that comprises a thermoplastic resin and constitutes one surface of the film, the second layer being a layer that is adjacent to the first layer and comprises a component (A), a component (B) and a component (C) each defined below, wherein in the second layer the content of the component (B) is from 20 to 900 parts by weight per 100 parts by weight of the component (A), the content of the component (C) is from 0.01 to 5% of the combined weight of the components (A), (B) and (C):

component (A): an ethylene/α-olefin copolymer that comprises structural units derived from ethylene and structural units derived from an α-olefin having from 3 to 20 carbon atoms and has a melt flow rate from 0.01 to 5 g/10 min and an activation energy of flow of 60 to 100 kJ/mol;
component (B): an ethylene/vinyl acetate copolymer that comprises structural units derived from ethylene and structural units derived from vinyl acetate and has a melt flow rate from 0.01 to 5 g/10 min and a content of the structural units derived from vinyl acetate from 3 to 20% by weight;
component (C): a nonionic surfactant.

The agricultural film of the present invention is a film including a first layer and a second layer, the first layer being a layer that comprises a thermoplastic resin and constitutes one surface of the film, the second layer being a layer that is adjacent to the first layer and comprises a component (A), a component (B) and a component (C) each defined below, wherein in the second layer the content of the component (B) is from 20 to 900 parts by weight per 100 parts by weight of the component (A), the content of the component (C) is from 0.01 to 5% of the combined weight of the components (A), (B) and (C):

component (A): an ethylene/α-olefin copolymer that comprises structural units derived from ethylene and structural units derived from an α-olefin having from 3 to 20 carbon atoms and has a melt flow rate from 0.01 to 5 g/10 min and an activation energy of flow of 60 to 100 kJ/mol;
component (B): an ethylene/vinyl acetate copolymer that comprises structural units derived from ethylene and structural units derived from vinyl acetate and has a melt flow rate from 0.01 to 5 g/10 min and a content of the structural units derived from vinyl acetate from 3 to 20% by weight;
component (C): a nonionic surfactant.

Component (A) is an ethylene/α-olefin copolymer that comprises structural units derived from ethylene and structural units derived from an α-olefin having from 3 to 20 carbon atoms. That is, component (A) is a copolymer produced by copolymerizing ethylene and at least one α-olefin selected from α-olefins having from 3 to 20 carbon atoms.

In the ethylene/α-olefin copolymer as component (A), the content of the structural units derived from ethylene is preferably from 50 to 99% by weight.

Examples of the α-olefins having from 3 to 20 carbon atoms include propylene, 1-butene, 4-methyl-1-pentene, 1-hexene, 1-octene and 1-decene. 1-Butene, 4-methyl-1-pentene and 1-hexene are preferred. The copolymer of component (A) may include two or more α-olefins. Such combinations of α-olefines include a combination of 1-butene and 4-methyl-1-gentene, a combination of 1-butene and 1-hexene, a combination of 1-butene and 1-octene, and a combination of 1-butene and 1-decene. Particularly preferable combinations are a combination of 1-butene and 4-methyl-1-pentene, and a combination of 1-butene and 1-hexene.

Examples of ethylene/α-olefin copolymers preferred as component (A) include copolymers of ethylene and an α-olefin having from 5 to 10 carbon atoms, and copolymers of ethylene, 1-butene and an α-olefin having from 5 to 10 carbon atoms. Copolymers of ethylene and an α-olefin having from 6 to 10 carbon atoms, and copolymers of ethylene, 1-butene and an α-olefin having from 6 to 10 carbon atoms are particularly preferred.

The ethylene/α-olefin copolymer as component (A) has an activation energy of flow (Ea) of 60 to 100 kJ/mol When the ethylene/α-olefin copolymer constituting a layer containing a nonionic surfactant has an activation energy of flow of less than 60 kJ/mol, the film is poor in durability of anti-dropping property. Moreover, from the viewpoint of impact resistance and transparency, the Ea of the ethylene/α-olefin copolymer is not more than 100 kJ/mol, and preferably not more than 90 kJ/mol.

The activation energy of flow (Ea) of an ethylene/α-olefin copolymer is a value calculated from the following Arrhenius type equation with respect to the shift factor ($a_T$) in the production of a master curve indicating the degree of dependency of the dynamic viscosity (η in Pa·sec) at 190°C on the shear rate, by shifting dynamic viscoelasticity data in accordance with the principle of temperature-time superposition, where the data are measured under conditions (1) through (4) below at individual temperatures T (K) using a viscoelasticity measuring instrument, Rheometrics Mechanical Spectrometer RMS-800 available from Rheometrics. Conditions for measuring dynamic viscoelasticity data at individual temperatures T (K)

(1) Geometry : parallel plate; diameter: 25 mm, plate distance: 1.5 to 2 mm
(2) Strain : 5%
(3) Shear rate: 0.1 to 100 rads/sec
(4) Temperature: 190, 170, 150, 130°C

In samples, a proper amount (e.g. 1000 ppm or more) of antioxidant (e.g. Irganox 1076 available from Ciba Specialty Chemicals) is added. The measurement is conducted under nitrogen atmosphere.

Arrhenius type equation of shift factor (aT)

$$\log(a_T) = Ea/R(1/T - 1/T_0)$$

where R is the gas constant and $T_0$ is a standard temperature (463K).

Rhios V.4.4.4 produced by Rheometrics is used as calculation software. A value of Ea calculated when the correlation factor $r_2$ obtained in linear approximation is 0.99 or more in the Arrhenius type plot, $\log(a_T)$ - (1/T), is used as the activation energy of flow of the ethylene/α-olefin copolymer.

The melt flow rate (MFR) of the ethylene/α-olefin copolymer, measured at a temperature of 190°C and a load of 21.18 N in the A method provided in JIS K7210-1995, is within the range from 0.01 to 5 g/10 min, and preferably from 0.1 to 50 g/10 min.

From the viewpoint of transparency and strength of the film, the molecular weight distribution (Mw/Mn) of the ethylene/α-olefin copolymer of component (A) is preferably within the range from 5 to 25, and more preferably from 5.5 to 20. The molecular weight distribution (Mw/Mn) is a value obtained by determining a weight-average molecular weight (Mw) and a number-average molecular weight (Mn) by gel permeation chromatography using polystyrene as a standard substance, and then dividing Mw by Mn.

From the viewpoint of the transparency, strength and dust-proofing property of the film, the ethylene/α-olefin copolymer of component (A) preferably satisfies the following formula (1): wherein MFR is a melt flow rate (unit: g/10 min) measured at a temperature of 190°C and a load of 21.18 N according to JIS K7210 and MT is a melt tension (unit: cN) at 190°C.

$$2 \times MFR^{-0.59} < MT < 20 \times MFR^{-0.59} \quad (1)$$

The melt tension MT in formula (1) is determined as follows: by use of a melt tension tester available from, for example, Toyo Seiki Seisaku-Sho, Ltd., a molten resin is extruded through an orifice (2.09 mm in diameter and 8 mm in length) with a piston at 190°C moving at a rate of 5.5 mm/min to form a strand and the strand is wound up around a roller 50 mm in diameter while the rotation speed of the roller is increased at a rate of 40 rpm/min. A value of tension which the strand shows just before breaking is regarded as the melt tension MT in formula (1).

From the viewpoint of moldability, the ethylene/α-olefin copolymer of component (A) preferably satisfies a relationship represented by the following formula (2), more preferably formula (2'), and even more preferably formula (2"), where [η] and MFR represent the intrinsic viscosity (unit: dl/g) and the melt flow rate (unit: g/10 min), described above, of the copolymer, respectively.

$$1.02 \times MFR^{-0.094} < [\eta] < 1.50 \times MFR^{-0.156} \quad (2)$$

$$1.05 \times MFR^{-0.094} < [\eta] < 1.47 \times MFR^{-0.156} \quad \text{formula (2')}$$

$$1.08 \times MFR^{-0.094} < [\eta] < 1.42 \times MFR^{-0.156} \quad \text{formula (2'')}$$

The intrinsic viscosity [η] in formulas (2), (2') and (2") is determined in the following manner. A 100-mg portion of an ethylene/α-olefin copolymer is dissolved at 135°C in 100 ml Tetralin containing 5% by weight of butylhydroxytoluene (BHT) as a heat degradation inhibitor to yield a sample solution. A relative viscosity (ηrel) at 135°C is calculated from falling times of the sample solution and a blank solution measured by use of a Ubbelohde viscometer. Then, the intrinsic viscosity is calculated from the formula given below. The blank solution is Tetralin containing 5% by weight of BHT as a heat degradation inhibitor.

$$[\eta] = 23.3 \times \log(\eta rel)$$

The MFR (unit: g/10 min) in formulas (2), (2') and (2") is the same as the MFR in formula (1).

From the viewpoint of balance between rigidity and impact strength of film, the density of the ethylene/α-olefin copolymer of component (A) measured by the method provided in JIS K6760-1981 is typically from 890 to 950 kg/m$^3$, preferably from 900 to 930 kg/m$^3$, and even more preferably from 905 to 925 kg/m3 .

The ethylene/a-olefin copolymer of component (A) can be produced by copolymerizing ethylene and a-olefin in the presence of a metallocene catalyst described below and hydrogen. The metallocene catalyst is a catalyst obtained by contacting a co-catalyst carrier, a crosslink-type bisindenylzirconium complex and an organoaluminum compound. The co-catalyst carrier is one obtained by contacting diethylzinc, fluorinated phenol, water, silica and trimethyldisilazane $(((CH_3)_3Si)_2NH)$.

The amounts of the diethylzinc, fluorinated phenol and water used are not particularly restricted. When the amounts of these substances used are expressed in molar ratio by diethylzind: fluorinated phenol: water = 1:p:q, it is preferable that p and q satisfy the following formula (3).

$$| 2-p-2q| \leq 1 \quad (3)$$

In formula (3), p is a number which is preferably from 0.01 to 1.99, more preferably from 0.10 to 1.80, even more preferably from 0.20 to 1.50, and most preferably from 0.30 to 1.00.

Regarding the amount of the silica used based on the amount of the diethylzinc used, the amount of zinc atoms derived from the diethylzinc contained in the particles resulting from contact of the diethylzinc with the silica is preferably 0.1 mmol or more, more preferably from 0.5 to 20 mmol in terms of the number of moles of zinc atoms contained in 1 gram of the particles. Therefore, the amount of silica is properly determined accordingly. Regarding the amount of the trimethylsilazane used based on the amount of the silica used, the amount of trimethylsilazane is preferably 0.1 mmol or more, more preferably from 0.5 to 20 mmol per gram of the silica.

Preferable examples of the crosslink-type bisindenylzirconium complex include racemi-ethylenebis(1-indenyl) zirconium dichloride and racemi-ethylenebis(1-indenyl)zirconium diphenoxide. Preferable examples of the organoaluminum compound include triisobutylaluminum and tri-n-octylaluminurn.

The amount of the crosslink type bisindenylzirconium complex used is preferably from $5 \times 10^{-6}$ to $5 \times 10^{-4}$ mol per gram of the co-catalyst carrier. The amount of the organoaluminum compound used is preferably from 1 to 2000 in terms of the ratio (Al/Zr) of the molar number of aluminum atoms in the organoaluminum compound to the molar number of zirconium atoms in the crosslink-type bisindenylzirconium complex.

The polymerization method is a polymerization method accompanied by formation of ethylene/α-olefin copolymer particles, e.g., gas phase polymerization, slurry polymerization or bulk polymerization. Gas phase polymerization is preferable.

Possible methods for feeding the components of the metallocene catalyst used in the production of the ethylene/a-olefin copolymer of component (A) to a reactor include a method in which the components are fed using an inert gas such as nitrogen and argon, hydrogen, ethylene or the like under water-free conditions, and a method in which the components are dissolved or diluted in a solvent and fed in the form of solution or slurry. The components of the catalyst may be fed separately, or any components may be previously contacted in any order before feeding. It is preferable that preliminary polymerization be conducted before execution of main polymerization and the preliminarily polymerized catalyst components are used as the catalyst components or catalyst for the main polymerization.

The polymerization temperature is typically lower than the temperature at which a resulting copolymer melts. It is preferably from 0 to 150°C, and more preferably from 30 to 100°C. For the purpose of controlling the melt fluidity of the copolymer, hydrogen may be added as a molecular weight controlling agent. An inert gas may co-exist in a mixed gas.

The ethylene/vinyl acetate copolymer (component (B)) contained in the second layer is an ethylene/vinyl acetate copolymer that comprises structural units derived from ethylene and structural units derived from vinyl acetate and has a content of the structural units derived from vinyl acetate from 3 to 20% by weight;

The ethylene/vinyl acetate copolymer of component (B) has a melt flow rate (MFR) from 0.01 to 5 g/10 min. The MFR is measured at a temperature of 190°C and a load of 21.18 N by method A provided in JIS K7210-1995. The ethylene/vinyl acetate copolymer of component (B) is produced by polymerizing ethylene and vinyl acetate by a conventional polymerization method using a conventional catalyst for olefin polymerization. For example, bulk polymerization, solution polymerization and the like using radical initiators can be used.

Examples of the nonionic surfactant of component (C) include sorbitan-based surfactants such as sorbitan fatty acid esters, e.g. sorbitan monopalmitate, sorbitan monostearate, sorbitan monomontanate, sorbitan monooleate and sorbitan dioleate, and their alkylene oxide adducts; glycerol-based surfactants such as glycerol fatty acid esters, e.g. glycerol monopalmitate, glycerol monostearate, diglycerol distearate, triglycerol monostearate, tetraglycerol dimontanate, glycol monooleate, diglycerol monooleate, diglycerol sesquioleate, tetraglycerol monooleate, hexaglycerol monooleate, hexaglycerol trioleate, tetraglycerol trioleate, tetraglycerol monolaurate and hexaglycerol monolaurate, and their alkylene oxide adducts; polyethylene glycol-based surfactants such as polyethylene glycol monopalmitate and polyethylene glycol monostearate; alkylene oxide adducts of alkylphenols; esters of sorbitan/glycerol condensates with organic acids; polyoxyethylene alkylamines, such as polyoxyethylene (2 mol) stearylamine, polyoxyethylene (4 mol) stearylamine, polyoxyethylene (2 mol) stearylamine monostearate, polyoxyethylene (4 mol) laurylamine monosterarate, and their fatty acid esters. These may be used singly or in combination of two or more thereof.

The second layer in the agricultural film of the present invention includes the aforementioned ethylene/α-olefin copolymer (component (A)), the ethylene/vinyl acetate copolymer (component (B)) and the nonionic surfactant (component (C)), and in particular, the content of component (B) is from 20 to 900 parts by weight per 100 parts by weight of component (A) and the content of component (C) is from 0.01 to 5% of the combined weight of components (A), (B) and (C). If the content of component (A) is too small (in other words, the content of component (B) is too large), the film may have a reduced strength. The content of component (B) is preferably not more than 400 parts by weight per 100 parts by weight of component (A). If the content of component (A) is too large (in other words, the content of component (B) is too small), the film may be poor in durability of anti-dropping property. The content of component (B) is preferably not less than 25 parts by weight, more preferably not less than 33 parts by weight, per 100 parts by weight of component (A). The content of component (C) is preferably within the range from 0.1 to 4% of the combined weight of components (A), (B) and (C). By setting the content of component (C) within the above range, it is possible to provide a film with excellent anti-dropping property and also possible to control the deterioration of transparency due to bleeding of component (C) to a film surface. In order for a film to exhibit anti-dropping property caused by action of an anti-dropping agent, the anti-dropping agent must bleed to a film surface. However, if a large amount of anti-dropping agent bleeds in an initial stage of use, the transparency of the film may deteriorate and the film cannot maintain its anti-dropping property for a long period of time. Since the agricultural film of the present invention allows component (C) in an amount sufficient for exhibiting anti-dropping property to bleed to a film surface slowly for a long period of time, the transparency of the film does not deteriorate and the film is excellent in durability of anti-dropping property.

The agricultural film of the present invention includes at least two layers including the second layer described above and a first layer containing a thermoplastic resin. The thermoplastic resin contained in the first layer, which is not particularly restricted, is preferably an olefin-based resin. Examples of such olefin-based resin include homopolymers of α-olefin such as polyethylene and polypropylene; ethylene/α-olefin copolymers such as ethylene/propylene copolymers, ethylene/1-butene copolymers, ethylene/4-methyl-1-pentene copolymers, ethylene/1-hexene copolymers and ethylene/1-octene copolymers; copolymers of α-olefin as the main component and other type of monomers, such as ethylene/vinyl acetate copolymers, ethylene/acrylic acid copolymers, ethylene/methyl methacrylate copolymers, ethylene/vinyl acetate/methyl methacrylate copolymers and ionomer resins: copolymers of olefin and vinyl group-containing aromatic monomers, such as ethylene/styrene copolymers; and copolymers of olefin and cyclic monomers, such as ethylene/ norbornene copolymers and ethylene/styrene/norbornene copolymers.

From the viewpoint of durability of anti-dropping property and anti-fogging property and the strength of the film, it is desirable that the first layer comprises a component (A), a component (B), a component (C) and a component (D) each defined below, wherein in the first layer the content of the component (B) is from 20 to 900 parts by weight per 100 parts by weight of the component (A), the content of the component (C) is from 0.01 to 5% of the combined weight of the components (A), (B), (C) and (D) and the content of the component (D) is from 0.01 to 3% of the combined weight of the components (A), (B), (C) and (D):

component (A): an ethylene/α-olefin copolymer that comprises structural units derived from ethylene and structural units derived from an α-olefin having from 3 to 20 carbon atoms and has a melt flow rate from 0.01 to 5 g/10 min and an activation energy of flow of 60 to 100 kJ/mol;
component (B): an ethylene/vinyl acetate copolymer that comprises structural units derived from ethylene and structural units derived from vinyl acetate and has a melt flow rate from 0.01 to 5 g/10 min and a content of the structural units derived from vinyl acetate from 3 to 20% by weight;
component (C): a nonionic surfactant.
component (D): a fluorine-containing surfactant, a silicone-based surfactant, or a mixture of a fluorine-containing surfactant and a silicone-based surfactant.

The component (A), component (B) and component (C) contained in the first layer are the same as the component (A), component (B) and component (C) contained in the second layer previously explained. Examples of the fluorine-containing surfactant of component (D) include fluorine-containing compounds having a perfluoroalkyl group, ω-hydrofluoroalkyl group, etc. Examples of the silicone-based surfactant include silicone compounds having an alkylsiloxane group. Specific examples of fluorine-containing surfactants include Unidyne DS-403, DS-406, DS-401 (commercial names) available from Daikin Industries, LTD. , and Surflon KC-40 (commercial name) available from SEIMI CHEMICAL Co., Ltd. Silicone-based surfactants include SH-3746 (commercial name) available from Toray Dow Corning Silicone Co. These may be used singly or in combination of two or more thereof. Component (D) bleeds to a surface of a film to work as an anti-fogging agent. In the first layer, the content of component (D) is preferably 0.01 to 3%, more preferably 0.02 to 2%, and even more preferably 0.05 to 1% of the combined weight of components (A), (B), (C) and (D).

In a case where the first layer is a layer containing the aforementioned components (A), (B), (C) and (D), when the film is used as a covering material of an agricultural facility (e.g. house, tunnel, etc.), it is desirable to extend the film so that the first layer faces the inside of the facility.

When the content of component (A) in the first layer, $V_{A1}$, and the content of component (A) in the second layer, $V_{A2}$ satisfy a relationship $V_{A1} \leq V_{A2}$, the agricultural film is excellent in transparency. On the other hand, when $V_{A1} > V_{A2}$, the film is highly excellent in durability of anti-dropping property.

The agricultural film of the present invention may include a layer or layers other than the first and second layers described above. Each of the layer or layers other than the first and second layers may be a layer comprising a thermoplastic resin, preferably, olefin-based resin. When the agricultural film of the present invention includes three or more layers, its layer constitution may be p-kind q-layer (where p s q, p is an integer of 2 or more, q is an integer of 3 or more), e.g. 2-kind 3-layer, 3-kind 3-layer, 2-kind 4-layer, 3-kind 4-layer, 4-kind 4-layer, 2-kind 5-layer, 3-kind 5-layer, 4-kind 5-layer, 5-kind 5-layer, 2-kind 6-layer, 3-kind 6-layer, 4-kind 6-layer, 5-kind 6-layer, and 6-kind 6-layer. (P ≤ Q and P are two or more and Q is three or more natural numbers.) When the agricultural film of the present invention includes three or more layers, it is desirable that both the first layer and the third layer containing a thermoplastic resin are outermost layers. That is, the second layer is desirably located between the first layer and the third layer. When two or more layers of the same composition are adjacent to each other, these layers are regarded to be one layer.

From the viewpoint of film strength, the thickness of the agricultural film of the present invention is desirably 0.01 mm or more. Further, from the viewpoint of easiness in extending work of a film, the thickness of the film is preferably 0.3 mm or less, and more preferably within the range from 0.03 to 0.25 mm.

The agricultural film of the present invention may contain conventional additives, if necessary. Examples of the additives include antioxidants, light stabilizers, UV absorbers, anti-fogging agents, anti-clouding agents, lubricants, anti-blocking agents, antistatic agents, pigments and inorganic fillers.

Examples of antioxidants include hindered phenol compounds such as 2,6-dialkylphenol derivatives and 2-alkylphenol derivatives, and phosphorus-containing ester compounds containing trivalent phosphorus atom such as phosphite compounds and phosphonite compounds. Such antioxidants may be used singly or in combination of two or more thereof. Particularly from the viewpoint of hue stability, use of a hindered phenol compound and a phosphorus-containing ester compound in combination is preferred. Antioxidants are preferably contained in each layer in an amount from 0.03 to 1% by weight, more preferably from 0.03 to 0.5% by weight.

Examples of light stabilizers include hindered amine compounds having a structure described in JP-A 8-73667.

Specific examples are Tinuvin 622-LD, Chimassorb 944-LD (available from Ciba Specialty Chemicals), Hostavin N30, VP Sanduvor PR-31 (available from Clariant, Ltd.), and Cyasorb UV3529, Cyasorb UV3346 (available from Cytec Industries Inc.). Further examples include sterically hindered amine ether compounds having a structure described in JP-A 11-315067. Specific examples include Tinuvin NOR371 (available from Ciba Specialty Chemicals). The content of a light stabilizer in each layer is preferably from 0.01 to 3% by weight, more preferably from 0.05 to 2% by weight, and even more preferably from 0.1 to 1% by weight.

Examples of UV absorbers include benzophenone UV absorbers, benzotriazol UV absorbers, benzoate UV absorbers and cyanoacrylate UV absorbers. These may be used singly or in combination of two or more thereof. From the viewpoint of weather resistance-imparting effect and suppression of bleeding to a film surface, the content of an UV absorber in each layer is preferably from 0.01 to 3% by weight, and more preferably from 0.03 to 2% by weight.

Inorganic fillers include complex hydroxides, such as hydrotalcite compounds and lithium aluminum complex hydroxides. Examples of hydrotalcite compounds include natural hydrotalcite and synthetic hydrotalcites such as DHT-4A (commercial name, available from Kyowa Chemical Industry Co., Ltd.) and Magcrysta (available from Kyowa Chemical Industry Co. , Ltd.). Specific examples of lithium aluminum complex hydroxides include Mizukalac (available from Mizusawa Industrial Chemicals), Ltd.) and Fujirein (available from Fuji Chemical Industry Co., Ltd.). Further examples include metal oxides, such as magnesium oxide, calcium oxide, aluminum oxide, silicon oxide and titanium oxide; hydroxides, such as magnesium hydroxide, calcium hydroxide and aluminum hydroxide; carbonates, such as magnesium carbonate and calcium carbonate; sulfates, such as potassium sulfate, magnesium sulfate, calcium sulfate, zinc sulfate and aluminum sulfate; phosphates, such as lithium phosphate, sodium phosphate, potassium phosphate, calcium phosphate and zirconium phosphate (e.g., H-type zirconium phosphate disclosed in JP-A 8-67774); silicates, such as magnesium silicate, calcium silicate, aluminum silicate and titanium silicate; aluminates, such as sodium aluminate, potassium aluminate and calcium aluminate; aluminosilicates, such as sodium aluminosilicate, potassium aluminosilicate and calcium aluminosilicate; clay minerals, such as kaolin, clay and talc; and other complex oxides.

The method for producing the agricultural film of the present invention is not particularly restricted. It can be produced by a method for forming a laminate film, e.g. co-extrusion tubular film processing, co-extrusion T-die casting, extrusion lamination and dry lamination. It is desirable to produce the film by co-extrusion tubular film processing. When the agricultural film is produced by co-extrusion tubular film processing, it is desirable to arrange the first layer in the outer side of the tube. When a film is produced by tubular processing, a film extruded in a tubular form through an inflation die is provided with a cutting line so that the tubular film can be opened when it is extended. The tubular film is then wound up. In a state where the film has been wound up, the inner layer of the tubular film is in contact with the inner layer itself. When the film is extended over frames of an agricultural facility to form an agricultural facility, a wound tubular film is unwound and opened along the cutting line. Thereafter, it is extended over the frames of the agricultural facility. In view of the workability in the film extension, it is desirable to arrange the first layer in the outer side of the tube.

The agricultural film of the present invention is used as a covering film of agricultural or horticultural facilities, such as greenhouse, tunnel or the like for cultivation of plants. In particular, the agricultural film of the present invention is used by extending it so that its first layer faces the inside of an agricultural facility.

EXAMPLES

Examples of the present invention are shown below, but the invention is not limited thereto. The test methods used in Examples and Comparative Examples are as follows.

(1) Transparency test (Haze)

Haze (%) was measured with a direct-reading Haze Computer HGM-2DP; C light source (available from Suga Test Instruments Co., Ltd.) in accordance with JIS K7105.

(2) Evaluation of transparency durability (ΔHaze)

A haze of a film just after the production thereof and a haze of the film after one-month storage at a temperature of 30°C and a relative humidity of 80 %RH were measured. Then, the difference between the two Haze measurements was calculated.

(3) Tests of anti-clouding property and durability thereof

A film was fixed with double-sided adhesive tape to an acrylic frame 34 cm in length and 5 cm in width, and was placed with the first layer surface downward and with an inclination of 15 degrees to the horizontal plane above a constant-temperature water bath placed in an environmental test room of constant temperature. The temperature conditions of (environmental test room/constant-temperature water bath) in the test were -3°C/20°C in a "low temperature test" and 23°C/40°C in a "high temperature test". Seven days and three months later, the state of waterdrops on the film surface was observed and the results were judged according to the following criterion:

A: the film surface is wet uniformly;
B: waterdrops adhere to the film surface partly; and
C: waterdrops adhere to the whole surface and the film looks cloudy.

(4) Tensile strength at break

JIS type 1 dumbbell specimens were subjected to a tensile test using an Autograph DSS100 (produced by Shimadzu Corporation). An average of the tensile strength at break (in MPa) in the MD and that (in MPa) in the TD was regarded as the tensile strength at break of the film.

Resins A1 and A2 corresponding to component (A) in the second layer were produced by the following methods.

(Production method of A1)

(1) Preparation of Co-Catalyst Carrier

A solid product (henceforth, referred to as co-catalyst carrier (a)) was prepared in a manner the same that in the preparation of component (A) described in Example 10(1) and (2) of JP-A 2003-171415. In particular, the following preparation steps were carried out

(1-1) Treatment of Silica

Into a 3 liter four-necked flask purged with nitrogen, 203 g of silica (Sylopol 948 manufacture by Davison Co., Ltd.; average particle diameter = 61 $\mu$m; pore capacity = 1.70 ml/g; specific surface area = 291 m$^2$/g) which had been heat-treated at 300°C under nitrogen flow was charged. Then, 1.2 liters of toluene was charged thereto while silica attached to the inner wall of the flask was washed down. After cooling to 5°C, a mixed solution of 84.4 ml of 1,1,1,3,3,3-hexamethyldisilazane and 115 ml of toluene was added dropwise thereto over 25 minutes. After the completion of the dropping, the resulting mixture was stirred at 5°C for 1 hr, and additionally at 95°C for 3 hrs, and then filtered. The residue was washed at 95°C on a filter with 1.2 liters of toluene four times. Thereafter, 1.2 liters of toluene was added, and then was allowed to stand overnight.

(1-2) Synthesis of component (A)

To the slurry obtained above, 0.550 liters (1.10 mol) of a hexane solution of diethylzinc (2.00 mol/liter) was added, and the mixture was cooled to 5°C. A solution prepared by dissolving 105 g (0.570 mol) of pentafluorophenol in 173 ml of toluene was added dropwise to that mixture over 65 minutes. After the completion of the dropping, the mixture was stirred at 5°C for 1 hour, and then it was heated to 40°C and stirred for 1 hr. Subsequently, the temperature was lowered to 5°C in an ice bath, and then 14.9 g (0.828 mol) of H$_2$O was dropped over 90 minutes. After the completion of the dropping, the mixture was stirred at 5°C for 1.5 hr, and then at 40°C for 2 hr. Thereafter, the resulting mixture was allowed to stand at room temperature overnight. Thereafter, the mixture was stirred at 80°C for 2 hours and then was allowed to stand, so that a solid component was precipitated. When an interface between a layer of the precipitated solid component and an upper slurry layer was observed, the upper slurry layer was removed, and then the remaining liquid component was filtered. Then, 1.7 liters of toluene was added and the mixture was stirred at 95°C for 2 hr. Thereafter, the mixture was stirred at 95°C in 1.7 liters of toluene four times and at room temperature in 1.7 liters of hexane twice, and was left at rest, so that a solid component was precipitated. When an interface between a layer of the precipitated solid component and an upper slurry layer, the upper slurry layer was removed, and then the remaining liquid component was subjected to washing by filtering. Then, the resulting solid component was dried under reduced pressure at room temperature for 3 hours, giving 386 g of component (A). Elementary analysis revealed that Zn = 2.4 mmol/g and F = 6.8 mmol/g.

(2) Preliminary Polymerization

A nitrogen-purged autoclave having a capacity of 210 liter equipped with a stirrer was charged with 0.63 kg of co-catalyst carrier (a), 80 liters of butane, 0.03 kg of 1-butene and 11 liters of hydrogen under normal temperature and normal pressure, and then the autoclave was heated up to 40°C. Further, ethylene was charged in an amount corresponding to 0.21 MPa of gas phase pressure in the autoclave, and after stabilization of the system, 208 mmol of triisobutylaluminum and 70 mmol of racemi-ethylenebis(1-indenyl)zirconium diphenoxide were added to initiate polymerization. The mixture was heated up to 49°C, and then preliminary polymerization was conducted at 49°C for a total time of 4 hours while ethylene and hydrogen were fed continuously. After completion of the polymerization, ethylene, butane, hydrogen gas and the like were purged and the remaining solid was dried under vacuum at room temperature to yield a catalyst component (henceforth, referred to as pre-polymerized catalyst component (a-1)) in which 14.1 g of ethylene/1-butene copolymer had been produced per gram of co-catalyst carrier (a).

(3) Continuous gas phase polymerization

Using the pre-polymerized catalyst component (a-1), copolymerization of ethylene and 1-hexene was conducted in a continuous type fluidized bed gas phase polymerization apparatus. The polymerization conditions included a temperature of 75.6°C, a total pressure of 2 MPa, a gas linear velocity of 0.36 m/sec, a molar ratio of hydrogen to ethylene of 0.67% and a molar ratio of 1-hexene to ethylene of 1.39%, and during the polymerization, ethylene, 1-hexene and hydrogen were fed continuously for maintaining the gas composition constant. Moreover, the pre-polymerized catalyst component (a-1) and triisobutylalum:Lnum were fed continuously at constant rates so as to maintain the total powder weight in the fluidized bed at 80 kg and adjust the average polymerization time to 3.8 hr. By the polymerization, a powder of ethylene/1-hexene copolymer (henceforth, referred to as PE-A1) was obtained at a productive efficiency of 20.9 kg/hr.

(4) Pelletization of Ethylene/1-hexene Copolymer Powder

A blend of the powder of PE-A1 and 750 ppm of an antioxidant (SUMILIZER GP, produced by Sumitomo Chemical Co., Ltd.) was pelletized at a feeding rate of 50 kg/hr, a screw speed of 450 rpm, a gate opening of 50%, a suction pressure of 0.2 MPa and a resin temperature of 200 to 230°C using an extruder (LCM50 produced by Kobe Steel, Ltd.). Thus, pellets of A1 were obtained. The basic properties of A1 are shown in Table 2.

(Production method of A2)

(1) Preparation of Co-Catalyst Carrier

In the preparation of resin A2, co-catalyst carrier (a), which was used in the production of resin A1 was used.

(2) Preliminary Polymerization

A nitrogen-purged autoclave having a capacity of 210 liter equipped with a stirrer was charged with 0.70 kg of co-catalyst carrier (a), 80 liters of butane, 0.02 kg of 1-butene and 11 liters of hydrogen under normal temperature and normal pressure, and then the autoclave was heated up to 41°C. Further, ethylene was charged in an amount corresponding to 0.21 MPa of gas phase pressure in the autoclave, and after stabilization of the system, 312 mmol of triisobutylaluminum and 105 mmol of racemi-ethylenebis(1-indenyl)zirconium diphenoxide were added to initiate polymerization. The mixture was heated up to 50°C, and then preliminary polymerization was conducted at 50°C for a total time of 4 hours while ethylene and hydrogen were fed continuously. After completion of the polymerization, ethylene, butane, hydrogen gas and the like were purged and the remaining solid was dried under vacuum at room temperature to yield a catalyst component (henceforth, referred to as pre-polymerized catalyst component (a-2)) in which 12.8 g of ethylene/1-butene copolymer had been produced per gram of co-catalyst carrier (a).

(3) Continuous gas phase polymerization

Using the pre-polymerized catalyst component (a-2), copolymerization of ethylene and 1-hexene was conducted in a continuous type fluidized bed gas phase polymerization apparatus. The polymerization conditions included a temperature of 74.5°C, a total pressure of 2 MPa, a gas linear velocity of 0.2.8 m/sec, a molar ratio of hydrogen to ethylene of 0.60% and a molar ratio of 1-hexene to ethylene of 0.75%, and during the polymerization, ethylene, 1-hexene and hydrogen were fed continuously for maintaining the gas composition constant. Moreover, the pre-polymerized catalyst component (a-2) and triisobutylaluminum were fed continuously at constant rates so as to maintain the total powder weight in the fluidized bed at 80 kg and adjust the average polymerization time to 4.1 hr. By the polymerization, a powder of ethylene/1-hexene copolymer (henceforth, referred to as PE-A2) was obtained at a productive efficiency of 19.4 kg/hr.

(4) Pelletization of Ethylene/1-hexene Copolymer Powder

A blend of the powder of PE-A2 and 750 ppm of an antioxidant (SUMILIZER GP, produced by Sumitomo Chemical Co., Ltd.) was pelletized at a feeding rate of 50 kg/hr, a screw speed of 450 rpm, a gate opening of 50%, a suction pressure of 0.2 MPa and a resin temperature of 200 to 230°C using an extruder (LCM50 produced by Kobe Steel, Ltd.). Thus, pellets of A2 were obtained. The basic properties of A2 are shown in Table 1.

Basic properties of resins A1 and A2 and component (A) used in Comparative Examples are shown in Table 1. In the tables, A3 and A4 are the following resins.

A3: SUMIKATHENE E FV402 produced by Sumitomo Chemical Co. , Ltd. (Ethylene/1-hexene copolymer)

A4: SUMIKATHENE E FV401 produced by Sumitomo Chemical Co., Ltd. (Ethylene/1-hexene copolymer)

Table 1

| Code of resin | | A1 | A2 | A3 | A4 |
|---|---|---|---|---|---|
| MFR 190°C, 2.18N | g/10 min | 0.6 | 0.4 | 3.5 | 3.6 |
| MFRR | -- | 117 | 109 | 17.6 | 19.0 |
| Density | kg/m$^3$ | 919 | 910 | 912 | 904 |
| Activation energy of flow (Ea) | kJ/mol | 67.4 | 72.8 | 33.9 | 31.0 |
| Molecular weight distribution (Mw/Mn) | -- | 7.9 | 6.1 | 2.5 | 2.2 |
| Melt tension (MT) | cN | 4.3 | 5.4 | 0.4 | 0.3 |
| (Left side of Formula (1)) $2 \times MFR^{-0.59}$ | -- | 2.7 | 3.4 | 1.0 | 0.9 |
| (Right side of Formula (1)) $20 \times MFR^{-0.59}$ | -- | 27.0 | 34.3 | 9.6 | 9.4 |
| Intrinsic viscosity [η] | dl/g | 1.16 | 1.13 | 1.26 | 1.26 |
| (Left side of Formula (2)) $1.02 \times MFR^{-0.094}$ | -- | 1.07 | 1.11 | 0.91 | 0.90 |
| (Right side of Formula (2)) $1.5.0 \times MFR^{-0.156}$ | -- | 1.62 | 1.73 | 1.23 | 1.23 |

[Example 1]

Components were weighed so that their contents become resin A1: 97.35 wt%, heat stabilizer E1: 0.05 wt%, weathering agent F1: 0.8 wt%, UV absorber G1 0.24 wt%, lubricant K1 0.06 wt%, lubricant K2: 0.2 wt%, anti-dropping agent H1: 0.5 wt% and antidropping agent H2: 0.8 wit%. Thereafter, they are kneaded with a 5-L Banbury mixer at 150°C for 5 minutes and then pelletized with a pelletizer. Thus, pellets for a third layer were obtained. In a similar manner, components to be contained a second layer and a first layer were weighed, respectively, followed by kneading with a 5-L Banbury mixer at 150°C for 5 minutes and pelletization with a pelletizer. Thus, pellets for the second layer and those for the first layer were obtained. Using a three-layer inflation molding machine (diameter of circular die: 100 mm; lip gap: 1.2 mm) equipped with 40-mm extruders for the individual layers, the materials for the individual layers were extruded at a processing temperature of 180°C so that the first layer, the second layer and the third layer became 20 μm, 60 μm and 20 μm in thickness, respectively. Then, the tubular film was cut to yield a three-layer laminated film. The inner layer of the tubular film was the third layer and the outer layer was the first layer.

[Examples 2-6, Comparative Examples 1-6]

Three-layer laminated films were produced in a manner the same as that of Example 1 except for changing the compositions of the individual layers as shown in Tables 2 and 4.

The evaluation results of the resulting films are shown in Tables 2-5.

The codes indicated in Tables 2 and 4 are as follows:

B1: EVATATE H2031 (ethylene/vinyl acetate copolymer, MFR = 1 g/10 min, vinyl acetate content = 19%) produced by Sumitomo Chemical Co., Ltd.

B2: EVATATE D2011 (ethylene/vinyl acetate copolymer, MFR = 1 g/10 min, vinyl acetate content = 5%) produced by Sumitomo Chemical Co., Ltd.

E1: Heat stabilizer (Commercial name: SUMILIZER BP76, produced by Sumitomo Chemical Co., Ltd.)

F1: Weathering agent: Hindered amine compound (Commercial name: Tinuvin 111FDL, produced by Ciba Specialty Chemicals)

G1: Benzophenone UV absorber (Commercial name: Sumisorb 130, produced by Sumitomo Chemical Co., Ltd.

H1: Anti-dropping agent (Nonionic surfactant): Mixture of monoglycerol monostearate/diglycerol sesquistearate with a weight ratio of 3/7

H2: Anti-dropping agent (Nonionic surfactant): 1-mol propylene oxide adduct of sorbitan monostearate

I1: Anti-fogging agent (Fluorine-containing surfactant) (Commercial name: Unidyne DS403, produced by Daikin Industries, Ltd.)

J1: IR absorber: Lithium aluminum complex hydroxide (Commercial name: Mizukalac, produced by Mizusawa Industrial Chemicals, Ltd.)

K1: Lubricant: Ethylenebisoleic amide

K2: Lubricant: Erucamide

Table 2

| | | | Example | | | | | |
|---|---|---|---|---|---|---|---|---|
| | | | 1 | 2 | 3 | 4 | 5 | 6 |
| 3rd layer | Resin | | A1 | A1 | A1 | A1 | A1 | A1 |
| | Heat stabilizer | | E1(0.2) | E1(0.2) | E1(0.2) | E1(0.2) | E1(0.2) | E1(0.2) |
| | Weathering agent | | F1(0.6) | F1(0.6) | F1(0.6) | F1(0.6) | F1(0.6) | F1(0.6) |
| | UV absorber | | G1(0.24) | G1(0.24) | G1(0.24) | G1(0.24) | G1(0.24) | G1(0.24) |
| | Lubricant | | K1(0.06) /K2(0.2) | K1(0.06) /K2(0.2) | K1(0.06) /K2(0.2) | K1(0.06) /K2 (0.2) | K1(0.06) /K2 (0.2) | K1(0.06) /K2 (0.2) |
| | Anti-dropping agent | | H1(0.5) /H2 (0.8) | H1(0.5) /H2 (0.8) | H1(0.5) /H2 (0.8) | H1(0.5) /H2 (0.8) | H1(0.5) /H2 (0.8) | H1(0.5) /H2 (0.8) |
| | Anti-fogging agent | | 11(0.2) | 11(0.2) | 11(0.2) | 11(0.2) | 11(0.2) | 11(0.2) |
| | Thickness ($\mu$m) | | 20 | 20 | 20 | 20 | 33 | 33 |
| 2nd layer | Resin (weight ratio) | | A1/B1 (50/50) | A1/B1 (50/50) | A2/B1 (50/50) | A2/B1 (50/50) | A2/B1 (25/75) | A2/B1 (75/25) |
| | Heat stabilizer | | E1(0.2) | E1(0.2) | E1(0.2) | E1(0.2) | E1(0.2) | E1(0.2) |
| | Weathering agent | | F1(0.6) | F1(0.6) | F1(0.6) | F1(0.6) | F1(0.6) | F1(0.6) |
| | IR absorber | | J1(8) | J1(8) | J1(8) | J1(8) | J1(8) | J1(8) |
| | Anti-dropping agent | | H1(0.6) /H2 (0.9) | H1(0.6) /H2 (0.9) | H1(0.6) /H2 (0.9) | H1(0.6) /H2 (0.9) | H1(0.6) /H2 (0.9) | H1(0.6) /H2 (0.9) |
| | Thickness ($\mu$m) | | 60 | 60 | 60 | 60 | 34 | 34 |

(continued)

| | | Example | | | | | |
|---|---|---|---|---|---|---|---|
| | | 1 | 2 | 3 | 4 | 5 | 6 |
| 1st layer | Resin (weight ratio) | B2 | A1/B2 (50/50) | B2 | A2/B2 (50/50) | A2/B2 (75/25) | A2/B2 (25/75) |
| | Heat stabilizer | E1(0.2) | E1(0.2) | E1(0.2) | E1(0.2) | E1(0.2) | E1(0.2) |
| | Weathering agent | F1(0.6) | F1(0.6) | F1(0.6) | F1(0.6) | F1(0.6) | F1(0.6) |
| | Lubricant | K1(0.06) /K2(0.2) | K1(0.06) /K2(0.2) | K1(.0.06) /K2(0.2) | K1(0.06) /K2 (0.2) | K1(0.06) /K2 (0.2) | K1(0.06) /K2 (0.2) |
| | Anti-dropping agent | H1(0.6) /H2 (0.9) | H1(0.6) /H2 (0.9) | H1(0.6) /H2 (0.9) | H1(0.6) /H2 (0.9) | H1(0.6) /H2 (0.9) | H1(0.6) /H2 (0.9) |
| | Anti-fogging agent | I1(0.2) | I1(0.2) | I1(0.2) | I1(0.2) | I1(0.2) | I1(0.2) |
| | Thickness (μm) | 20 | 20 | 20 | 20 | 33 | 33 |

Table 3

| | | Example | | | | | |
|---|---|---|---|---|---|---|---|
| | | 1 | 2 | 3 | 4 | 5 | 6 |
| Overall thickness (μm) | | 100 | 100 | 100 | 100 | 100 | 100 |
| Transparency (Haze) | | 17 | 17 | 17 | 17 | 16 | 18 |
| Haze after storage (ΔHaze) | | 21(4) | 20(3) | 20(3) | 21(4) | 21(5) | 21(3) |
| Anti-dropping property | | | | | | | |
| Low temp. -2/20°C | 7 days | A | A | A | A | A | A |
| | 3 months | A | A | A | A | A | A |
| | 6 months | B | B | B | B | A | B |
| High temp. 23/40°C | 7 days | A | A | A | A | A | A |
| | 3 months | A | A | A | A | A | A |
| | 6 months | B | B | B | B | A | B |
| Tensile strength at break (MPa) | | 27 | 29 | 28 | 30 | 31 | 31 |

Table 4

| | | Comparative Example | | | | | |
|---|---|---|---|---|---|---|---|
| | | 1 | 2 | 3 | 4 | 5 | 6 |
| 3rd layer | Resin | A1 | A1 | A1 | A1 | A1 | A1 |
| | Heat stabilizer | E1(0.2) | E1(0.2) | E1(0.2) | E1(0.2) | E1(0.2) | E1(0.2) |
| | Weathering agent | F1(0.6) | F1(0.6) | F1(0.6) | F1(0.6) | F1(0.6) | F1(0.6) |
| | UV absorber | G1(0.24) | G1(0.24) | G1(0.24) | G1(0.24) | G1(0.24) | G1(0.24) |
| | Lubricant | K1(0.06) /K2(0.2) | K1(0.06) /K2(0.2) | K1(0.06) /K2(0.2) | K1(0.06) /K2 (0.2) | K1(0.06) /K2 (0.2) | K1(0.06) /K2 (0.2) |
| | Anti-dropping agent | H1(0.5) /H2 (0.8) | H1(0.5) /H2 (0.8) | H1(0.5) /H2 (0.8) | H1(0.5) /H2 (0.8) | H1(0.5) /H2 (0.8) | H1(0.5) /H2 (0.8) |
| | Anti-fogging agent | I1(0.2) | I1(0.2) | I1(0.2) | I1(0.2) | I1(0.2) | I1(0.2) |
| | Thickness ($\mu$m) | 20 | 20 | 20 | 20 | 20 | 20 |
| 2nd layer | Resin (weight ratio) | A3/B1 (50/50) | A3/B1 (50/50) | A3/B1 (50/50) | B1 | A1 | A1/B1 (50/50) |
| | Heat stabilizer | E1(0.2) | E1(0.2) | E1(0.2) | E1(0.2) | E1(0.2) | E1(0.2) |
| | Weathering agent | F1(0.6) | F1(0.6) | F1(0.6) | F1(0.6) | F1(0.6) | F1(0.6) |
| | IR absorber | J1(8) | J1(8) | J1(8) | J1(8) | J1(8) | J1(8) |
| | Anti-dropping agent | H1(0.6) /H2 (0.9) | H1(1.0) /H2 (1.5) | H1(1.0) /H2 (1.5) | H1(1.0) /H2 (1.5) | H1(1.0) /H2 (1.5) | -- |
| | Thickness ($\mu$m) | 60 | 60 | 60 | 60 | 60 | 60 |

(continued)

|  |  | Comparative Example | | | | | |
|---|---|---|---|---|---|---|---|
|  |  | 1 | 2 | 3 | 4 | 5 | 6 |
| 1st layer | Resin (weight ratio) | 82 | 82 | A4/B2 (50/50) | B2 | A1 | A1/B2 (50/50) |
|  | Heat stabilizer | E1(0.2) | E1(0.2) | E1(0.2) | E1(0.2) | E1(0.2) | E1(0.2) |
|  | Weathering agent | F1(0.6) | F1(0.6) | F1(0.6) | F1(0.6) | F1(0.6) | F1(0.6) |
|  | Lubricant | K1(0.06) /K2(0.2) | K1(0.06) /K2(0.2) | K1(0.06) /K2(0.2) | K1(0.06) /K2 (0.2) | K1(0.06) /K2 (0.2) | K1(0.06) /K2 (0.2) |
|  | Anti-dropping agent | H1(0.6) /H2 (0.9) | H1(1.0) /H2 (1.5) | H1(1.0) /H2 (1.5) | H1(1,0) /H2 (1.5) | H1(0.6) /H2 (0.9) | -- |
|  | Anti-fogging agent | I1(0.2) | I1(0.2) | I1(0.2) | I1(0.2) | I1(0.2) | I1(0.2) |
|  | Thickness (μm) | 20 | 20 | 20 | 20 | 20 | 20 |

Table 5

|  |  | Comparative Example | | | | | |
|---|---|---|---|---|---|---|---|
|  |  | 1 | 2 | 3 | 4 | 5 | 6 |
| Overall thickness (μm) | | 100 | 100 | 100 | 100 | 100 | 100 |
| Transparency (Haze) | | 18 | 19 | 19 | 18 | 18 | 17 |
| Haze after storage (ΔHaze) | | 26(8) | 33(14) | 34(15) | 21(3) | 26(8) | 17(0) |
| Anti-dropping property | | | | | | | |
| Low temp. -2/20°C | 7 days | A | A | A | A | A | C |
|  | 3 months | C | B | B | B | B | C |
|  | 6 months | C | C | C | C | C | C |
| High temp. 23/40°C | 7 days | A | A | A | A | A | C |
|  | 3 months | C | B | B | B | B | C |
|  | 6 months | C | C | C | C | C | C |
| Tensile strength at break Tensile strength at break (MPa) | | 28 | 28 | 30 | 22 | 28 | 27 |

**Claims**

1. An agricultural film comprising a first layer and a second layer, the first layer being a layer that comprises a thermoplastic resin and constitutes one surface of the film, the second layer being a layer that is adjacent to the first layer and comprises a component (A), a component (B) and a component (C) each defined below, wherein in the second layer the content of the component (B) is from 20 to 900 parts by weight per 100 parts by weight of the component (A), the content of the component (C) is from 0.01 to 5% of the combined weight of the components (A), (B) and (C):

component (A): an ethylene/$\alpha$-olefin copolymer that comprises structural units derived from ethylene and structural units derived from an $\alpha$-olefin having from 3 to 20 carbon atoms and has a melt flow rate from 0.01 to 5 g/10 min, measured at a temperature of 190°C and a load of 21.18 N according to the A method provided in JIS K7210-1995, and an activation energy of flow (Ea) of 60 kJ/mol to 100 kJ/mol, as defined by the equation $\log(a_T)$ = Ea/R(1/T-1/$T_0$), wherein R is the gas constant and $T_0$ is the standard temperature of 463 K and $a_T$ is the shift factor as defined in the specification

component (B): an ethylene/vinyl acetate copolymer that comprises structural units derived from ethylene and structural units derived from vinyl acetate and has a melt flow rate from 0.01 to 5 g/10 min, measured at a temperature of 190°C and a load of 21.18 N according to the A method provided in JIS K7210-1995, and a content of the structural units derived from vinyl acetate from 3 to 20% by weight;

component (C): a nonionic surfactant.

2. The agricultural film according to claim 1, wherein
the first layer comprises a component (A), a component (B), a component (C) and a component (D) each defined below, wherein in the first layer the content of the component (B) is from 20 to 900 parts by weight per 100 parts by weight of the component (A), the content of the component (C) is from 0.01 to 5% of the combined weight of the components (A), (B), (C) and (D) and the content of the component (D) is from 0.01 to 3% of the combined weight of the components (A), (B), (C) and (D):

component (A): an ethylene/$\alpha$-olefin copolymer that comprises structural units derived from ethylene and structural units derived from an $\alpha$-olefin having from 3 to 20 carbon atoms and has a melt flow rate from 0.01 to 5 g/10 min, measured at a temperature of 190°C and a load of 21.18 N according to the A method provided in JIS K7210-1995, and an activation energy of flow (Ea) of 60 kJ/mol to 100 kJ/mol, as defined by the equation $\log(a_T)$ = Ea/R(1/T-1/$T_0$), wherein R is the gas constant and $T_0$ is the standard temperature of 463 K and $a_T$ is the shift factor as defined in the specification

component (B): an ethylene/vinyl acetate copolymer that comprises structural units derived from ethylene and structural units derived from vinyl acetate and has a melt flow rate from 0.01 to 5 g/10 min, measured at a temperature of 190°C and a load of 21.18 N according to the A method provided in JIS K7210-1995, and a content of the structural units derived from vinyl acetate from 3 to 20% by weight;

component (C): a nonionic surfactant;

component (D): a fluorine-containing surfactant, a silicone-based surfactant, or a mixture of a fluorine-containing surfactant and a silicone-based surfactant.

3. The agricultural film according to claim 1 or 2 further comprising a third layer comprising a thermoplastic resin, wherein the third layer constitutes the other surface of the film.

**Patentansprüche**

1. Eine landwirtschaftliche Folie, umfassend eine erste Schicht und eine zweite Schicht, wobei die erste Schicht eine Schicht ist, die ein thermoplastisches Harz umfasst und eine Oberfläche der Folie bildet, wobei die zweite Schicht eine Schicht ist, die zu der ersten Schicht benachbart ist und eine Komponente (A), eine Komponente (B) und eine Komponente (C) umfasst, die jeweils nachstehend definiert sind, wobei in der zweiten Schicht der Gehalt der Komponente (B) 20 bis 900 Gewichtsteile pro 100 Gewichtsteile der Komponente (A) beträgt, der Gehalt der Komponente (C) 0,01 bis 5% des Gesamtgewichts der Komponenten (A), (B) und (C) beträgt:

Komponente (A): ein Ethylen/$\alpha$-Olefin-Copolymer, das von Ethylen abgeleitete Struktureinheiten und von einem $\alpha$-Olefin mit 3 bis 20 Kohlenstoffatomen abgeleitete Struktureinheiten umfasst und eine Schmelzflussrate von 0,01 bis 5 g/10 min, gemessen bei einer Temperatur von 190°C und einer Last von 21,18 N gemäß dem in JIS K7210-1995 bereitgestellten Verfahren A, und eine Fließaktivierungsenergie (Ea) von 60 kJ/mol bis 100 kJ/mol, wie durch die Gleichung $\log(a_T)$ = Ea/R(1/T-1/$T_o$) definiert, aufweist, wobei R die Gaskonstante ist und $T_0$ die Standardtemperatur von 463 K ist und $a_T$ der wie in der Beschreibung definierte Verschiebungsfaktor ist,

Komponente (B): ein Ethylen/Vinylacetat-Copolymer, das von Ethylen abgeleitete Struktureinheiten und von Vinylacetat abgeleitete Struktureinheiten umfasst und eine Schmelzflussrate von 0,01 bis 5 g/10 min, gemessen bei einer Temperatur von 190°C und einer Last von 21,18 N gemäß dem in JIS K7210-1995 bereitgestellten Verfahren A, und einen Gehalt der von Vinylacetat abgeleiteten Struktureinheiten von 3 bis 20 Gew.-% aufweist;

Komponente (C): eine nicht-ionische grenzflächenaktive Substanz.

**2.** Die landwirtschaftliche Folie nach Anspruch 1, wobei die erste Schicht eine Komponente (A), eine Komponente (B), eine Komponente (C) und eine Komponente (D) umfasst, die jeweils nachstehend definiert sind, wobei in der ersten Schicht der Gehalt der Komponente (B) 20 bis 900 Gewichtsteile pro 100 Gewichtsteile der Komponente (A) beträgt, der Gehalt der Komponente (C) 0,01 bis 5% des Gesamtgewichts der Komponenten (A), (B), (C) und (D) beträgt und der Gehalt der Komponente (D) 0,01 bis 3% des Gesamtgewichts der Komponenten (A), (B), (C) und (D) beträgt:

Komponente (A): ein Ethylen/$\alpha$-Olefin-Copolymer, das von Ethylen abgeleitete Struktureinheiten und von einem $\alpha$-Olefin mit 3 bis 20 Kohlenstoffatomen abgeleitete Struktureinheiten umfasst und eine Schmelzflussrate von 0,01 bis 5 g/10 min, gemessen bei einer Temperatur von 190°C und einer Last von 21,18 N gemäß dem in JIS K7210-1995 bereitgestellten Verfahren A, und eine Fließaktivierungsenergie (Ea) von 60 kJ/mol bis 100 kJ/mol, wie durch die Gleichung $\log(a_T) = Ea/R(1/T-1/T_0)$ definiert, aufweist, wobei R die Gaskonstante ist und $T_0$ die Standardtemperatur von 463 K ist und $a_T$ der wie in der Beschreibung definierte Verschiebungsfaktor ist,
Komponente (B): ein Ethylen/Vinylacetat-Copolymer, das von Ethylen abgeleitete Struktureinheiten und von Vinylacetat abgeleitete Struktureinheiten umfasst und eine Schmelzflussrate von 0,01 bis 5 g/10 min, gemessen bei einer Temperatur von 190°C und einer Last von 21,18 N gemäß dem in JIS K7210-1995 bereitgestellten Verfahren A,
und einen Gehalt der von Vinylacetat abgeleiteten Struktureinheiten von 3 bis 20 Gew.-% aufweist;
Komponente (C): eine nicht-ionische grenzflächenaktive Substanz;
Komponente (D): eine Fluor enthaltende grenzflächenaktive Substanz, eine grenzflächenaktive Substanz auf Siliconbasis oder ein Gemisch einer Fluor enthaltenden grenzflächenaktiven Substanz und einer grenzflächenaktiven Substanz auf Siliconbasis.

**3.** Die landwirtschaftliche Folie nach Anspruch 1 oder 2, weiter umfassend eine dritte Schicht, die ein thermoplastisches Harz umfasst, wobei die dritte Schicht die andere Oberfläche der Folie darstellt.

**Revendications**

**1.** Film agricole comprenant une première couche et une seconde couche, la première couche étant une couche qui comprend une résine thermoplastique et constitue une surface du film, la seconde couche étant une couche qui est adjacente à la première couche et comprend un composant (A), un composant (B) et un composant (C) définis chacun ci-dessous, où, dans la seconde couche, la teneur du composant (B) est de 20 à 900 parties en poids pour 100 parties en poids du composant (A), la teneur du composant (C) est de 0,01 à 5 % du poids combiné des composants (A), (B) et (C) :

composant (A) : un copolymère éthylène/$\alpha$-oléfine qui comprend des unités structurales dérivées de l'éthylène et des unités structurales dérivées d'une $\alpha$-oléfine ayant de 3 à 20 atomes de carbone et a un indice de fusion de 0,01 à 5 g/10 min, mesuré à une température de 190°C et une charge de 21,18 N selon le procédé A fourni dans JIS K7210-1995, et une énergie d'activation d'écoulement (Ea) de 60 kJ/mol à 100 kJ/mol, telle qu'elle est définie par l'équation $\log(a_T) = Ea/R(1/T-1/T_0)$, où R est la constante des gaz et $T_0$ est la température standard de 463 K et $a_T$ est le facteur de déplacement tel qu'il est défini dans la description,
composant (B) : un copolymère éthylène/acétate de vinyle qui comprend des unités structurales dérivées de l'éthylène et des unités structurales dérivées de l'acétate de vinyle et a un indice de fusion de 0,01 à 5 g/10 min, mesuré à une température de 190°C et une charge de 21,18 N selon le procédé A fourni dans JIS K7210-1995, et une teneur des unités structurales dérivées de l'acétate de vinyle de 3 à 20 % en poids ;
composant (C) : un tensioactif non ionique.

**2.** Film agricole selon la revendication 1, où la première couche comprend un composant (A), un composant (B), un composant (C) et un composant (D) définis chacun ci-dessous, où, dans la première couche, la teneur du composant (B) est de 20 à 900 parties en poids pour 100 parties en poids du composant (A), la teneur du composant (C) est de 0,01 à 5 % du poids combiné des composants (A), (B), (C) et (D) et la teneur du composant (D) est de 0,01 à 3 % du poids combiné des composants (A), (B), (C) et (D) :

composant (A) : un copolymère éthylène/$\alpha$-oléfine qui comprend des unités structurales dérivées de l'éthylène et des unités structurales dérivées d'une $\alpha$-oléfine ayant de 3 à 20 atomes de carbone et a un indice de fusion de 0,01 à 5 g/10 min, mesuré à une température de 190°C et une charge de 21,18 N selon le procédé A fourni dans JIS K7210-1995, et une énergie d'activation d'écoulement (Ea) de 60 kJ/mol à 100 kJ/mol, telle qu'elle est définie par l'équation $\log(a_T) = Ea/R(1/T-1/T_0)$, où R est la constante des gaz et $T_0$ est la température

standard de 463 K et $a_T$ est le facteur de déplacement tel qu'il est défini dans la description,

composant (B) : un copolymère éthylène/acétate de vinyle qui comprend des unités structurales dérivées de l'éthylène et des unités structurales dérivées de l'acétate de vinyle et a un indice de fusion de 0,01 à 5 g/10 min, mesuré à une température de 190°C et une charge de 21,18 N selon le procédé A fourni dans JIS K7210-1995, et une teneur des unités structurales dérivées de l'acétate de vinyle de 3 à 20 % en poids ;

composant (C) : un tensioactif non ionique ;

composant (D) : un tensioactif contenant du fluor, un tensioactif à base de silicone, ou un mélange d'un tensioactif contenant du fluor et d'un tensioactif à base de silicone.

3. Film agricole selon la revendication 1 ou 2 comprenant en outre une troisième couche comprenant une résine thermoplastique, où la troisième couche constitue l'autre surface du film.

**EP 1 839 851 B1**

**REFERENCES CITED IN THE DESCRIPTION**

**Patent documents cited in the description**

- JP 2001334612 A
- JP 8073667 A
- JP 11315067 A
- JP 8067774 A
- JP 2003171415 A